# EUROPEAN PATENT APPLICATION

(11) **EP 2 282 027 A1**
(43) Date of publication of application: **09.02.2011**
(21) Application number: 10005144.0
(22) Date of filing: 17.05.2010
(51) Int. Cl.: F01N 3/20, F01N 3/035, F01N 9/00, F02B 37/00

(54) **Heating exhaust gas for diesel particulate filter regeneration**

(30) Priority: 29.07.2009 US 511117
(71) Applicant: International Engine Intellectual Property Company, LLC, Warrenville IL 60555 (US)
(72) Inventor: Berke, Paul L., Chicago IL 60659 (US); Adelman, Brad J., Chigaco Il 60610 (US)
(74) Representative: Kuhnen & Wacker

(57) **Abstract**

An electrically heated element (52) within the exhaust system of a diesel engine raises the exhaust temperature sufficiently at idle or similar low exhaust flow/low exhaust temperature conditions to the point where the DOC (44) is activated to bum fuel. As soon as the catalyst within the DOC housing is active, the DPF (48) regeneration can be initiated. The electrically heated element can be provided within the exhaust pipe between the turbine (40) outlet of turbocharged diesel (32) engines and the DOC housing inlet. The electrically heated element can be powered from the engine alternator (60) and activated when needed by the engine electronic control module (20).

## Description

### FIELD OF THE INVENTION

This invention relates generally to motor vehicles, such as trucks, that are powered by internal combustion engines, particularly diesel engines that have exhaust gas treatment devices for treating exhaust gases passing through their exhaust systems.

### BACKGROUND OF THE INVENTION

A known system for treating exhaust gas passing through an exhaust system of a diesel engine comprises a diesel oxidation catalyst (DOC) that oxidizes hydrocarbons (HC) to CO₂ and H2O and converts NO to NO₂, and a diesel particulate filter (DPF) that traps diesel particulate matter (DPM). DPM includes soot or carbon, the soluble organic fraction (SOF), and ash (i.e. lube oil additives etc.). The DPF is located downstream of the DOC in the exhaust gas flow. The combination of these two exhaust gas treatment devices prevents significant amounts of pollutants such as hydrocarbons, carbon monoxide, soot, SOF, and ash, from entering the atmosphere. The trapping of DPM by the DPF prevents black smoke from being emitted from a vehicle's exhaust pipe.

The DOC oxidizes hydrocarbons (HC) and converts NO to NO₂. The organic constituents of trapped DPM within the DPF, i.e., carbon and SOF, are oxidized within the DPF, using the NO₂ generated by the DOC, to form CO₂ and H₂O, which can then exit the exhaust pipe to atmosphere.

The rate at which trapped carbon is oxidized to CO₂ is controlled not only by the concentration of NO₂ or O₂ but also by temperature. Specifically, there are three important temperature parameters for a DPF.

The first temperature parameter is the oxidation catalyst's "light off' temperature, below which catalyst activity is too low to oxidize HC. Light off temperature is typically around 250°C.

The second temperature parameter controls the conversion of NO to NO₂. This NO conversion temperature spans a range of temperatures having both a lower bound and an upper bound, which are defined as the minimum temperature and the maximum temperature at which 40% or greater NO conversion is achieved. The conversion temperature window defined by those two bounds extends from approximately 250°C. to approximately 450° C.

The third temperature parameter is related to the rate at which carbon is oxidized in the filter. Reference sources in relevant literature call that temperature the "Balance Point Temperature" (or BPT). It is the temperature at which the rate of oxidation of particulate, also sometimes referred to as the rate of DPF regeneration, is equal to the rate of accumulation of particulate. The BPT is one of the parameters that determines the ability of a DPF to enable a diesel engine to meet expected tailpipe emissions laws and/or regulations.

Typically, a diesel engine runs relatively lean and relatively cool compared to a gasoline engine. That factor makes natural achievement of BPT problematic.

Therefore, a DPF requires regeneration from time to time in order to maintain particulate trapping efficiency. Regeneration involves the presence of conditions that will burn off trapped particulates whose unchecked accumulation would otherwise impair DPF effectiveness. While "regeneration" refers to the general process of burning off DPM, two particular types of regeneration are recognized by those familiar with the regeneration technology as presently being applied to motor vehicle engines.

"Passive regeneration" is generally understood to mean regeneration that can occur anytime that the engine is operating under conditions that burn off DPM without initiating a specific regeneration strategy embodied by algorithms in an engine control system. "Active regeneration" is generally understood to mean regeneration that is initiated intentionally, either by the engine control system on its own initiative or by the driver causing the engine control system to initiate a programmed regeneration strategy, with the goal of elevating temperature of exhaust gases entering the DPF to a range suitable for initiating and maintaining burning of trapped particulates.

Active regeneration may be initiated even before a DPF becomes loaded with DPM to an extent where regeneration would be mandated by the engine control system on its own. When DPM loading beyond that extent is indicated to the engine control system, the control system forces active regeneration, and that is sometimes referred to simply as a forced regeneration.

The creation of conditions for initiating and continuing active regeneration, whether forced or not, generally involves elevating the temperature of exhaust gas entering the DPF to a suitably high temperature.

There are several methods for initiating a forced regeneration of a DPF such as retarding the start of main fuel injections or post-injection of diesel fuel to elevate exhaust gas temperatures entering the DPF while still leaving excess oxygen for burning the trapped particulate matter. Post-injection may be used in conjunction with other procedures and/or devices for elevating exhaust gas temperature to the relatively high temperatures needed for active DPF regeneration.

These methods are able to increase the exhaust gas temperature sufficiently to elevate the catalyst's temperature above catalyst "light off" temperature and provide excess HC that can be oxidized by the catalyst. Such HC oxidation provides the necessary heat to raise the temperature in the DPF above the BPT.

Low load/low flow drive cycles such as garbage trucks, utility trucks, and airport re-fueling trucks have difficulty attaining the necessary temperatures to initiate DPF regeneration. Typically, the exhaust gas temperature at engine idle is 150° C while DOC activation is not achieved until about 250° C. Engine based modifications can be made to overcome this drawback but not without a fuel and performance penalty. Some auxiliary options can compensate for this drawback such as fuel-burners or a syn-gas reformer system.

The present inventors have recognized that drive cycles exist today where active DPF regeneration is not achievable because exhaust gas temperatures and diesel oxidation catalyst (DOC) temperature are insufficient to oxidize fuel which generates the desired exotherm.

### SUMMARY

The disclosed embodiments of the invention provide a heater that raises the exhaust gas temperature at low flow rates, such as at engine idle, to the point where the catalyst within the DOC housing is activated to burn fuel. As soon as the catalyst within the DOC housing is active, the DPF regeneration can be initiated. The heater system will raise the exhaust temperature sufficiently at the idle point or similar low flow/low temperature point. Accordingly, DPF regeneration is no longer dependent upon vehicle drive cycle.

An electrically heated element can be provided within the exhaust pipe between the turbine outlet and the DOC housing inlet, preferably located just in front of the DOC housing to minimize temperature losses. The heater can be powered through a relay from the vehicle alternator. A control signal to the relay will turn on when the engine control system requests DPF regeneration but cannot achieve the desired exhaust gas temperature to the DOC housing.

The disclosed embodiment provides an exhaust system for a diesel engine. The diesel engine includes an exhaust path that receives exhaust from combustion of fuel within the diesel engine. A DOC housing is arranged within the exhaust path. A DPF is arranged within the exhaust path downstream of the DOC housing. An electric heating element is arranged within the exhaust path upstream of the DOC housing. The electric heating element is configured to raise the temperature of exhaust gas entering the DOC housing. The electric heating element can be sized to heat exhaust gas to about 250°C.

An engine control receives engine operating signals and controls engine parameters to control emissions and optimizes engine performance. The engine control is in signal-communication with an electronic relay. The relay has a signal side that is signal-connected to the engine control and a power side connected between engine electric power and the electric heating element. The engine control triggers the relay to provide electric power to the electric heating element when exhaust temperature must be raised for sufficient DOC activation for effective DPF regeneration. In this regard, a temperature sensor can be arranged between the DOC housing and the electric heating element, the sensor being signal-connected to the engine control.

The exhaust path can include a turbine upstream of the DOC housing. The electric heating element can be arranged between the turbine and the DOC housing, or at the inlet to the DOC housing.

The invention provides a method of initiating diesel particulate filter regeneration that includes the steps of:
determining if regeneration is required; and
heating the exhaust gas in communication with the DOC using an electric heating element in heat transfer communication with the exhaust gas.
The step of heating the exhaust gas can be further defined by the steps of:
sensing the temperature of the exhaust gas in communication with the DOC; and
only if the temperature of the exhaust gas is below a required DOC activation temperature, undertaking the heating of the exhaust gas.

Numerous other advantages and features of the present invention will be become readily apparent from the following detailed description of the invention and the embodiments thereof, from the claims and from the accompanying drawings.

### BRIEF DESCRIPTION OF THE DRAWINGS

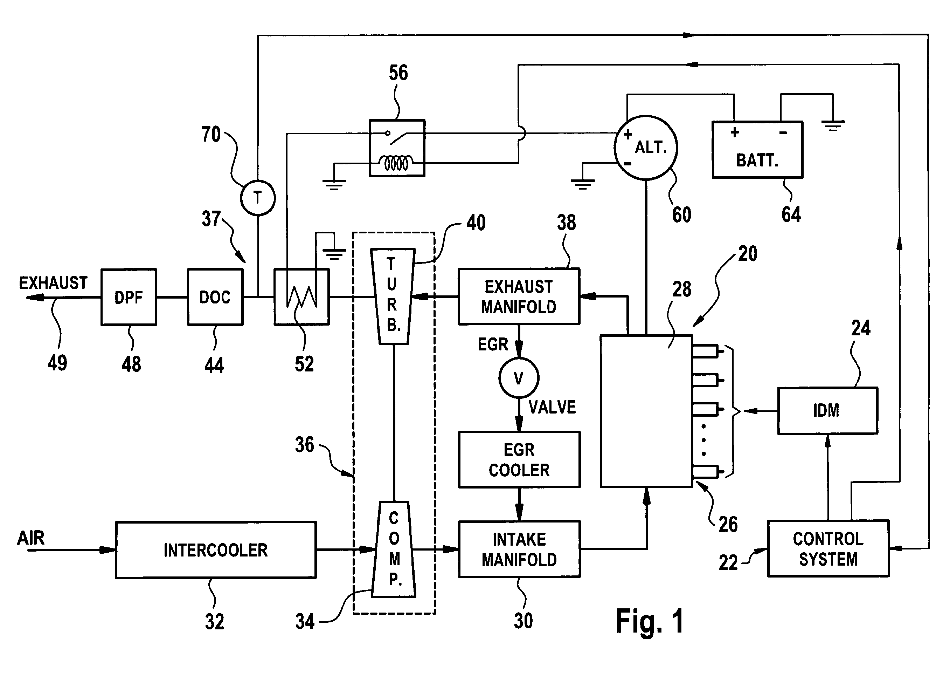

FIG. 1 is a schematic illustration of a representative diesel engine and control with exhaust after-treatment devices.

### DETAILED DESCRIPTION

While this invention is susceptible of embodiment in many different forms, there are shown in the drawings, and will be described herein in detail, specific embodiments thereof with the understanding that the present disclosure is to be considered as an exemplification of the principles of the invention and is not intended to limit the invention to the specific embodiments illustrated.

FIG. 1 shows a schematic diagram of an exemplary diesel engine 20 for powering a motor vehicle. Engine 20 has a processor-based engine control 22, such as an engine electronic control unit or module, that processes data from various sources to develop various control data for controlling various aspects of engine operation. The data processed by control 22 may originate at external sources, such as sensors, and/or be generated internally.

Control 22 includes an injector driver module 24 for controlling the operation of electric-actuated fuel injectors 26 that inject fuel into combustion chambers in the engine cylinder block 28. A respective fuel injector 26 is associated with each cylinder and comprises a body that is mounted on the engine and has a nozzle through which fuel is injected into the corresponding engine cylinder. A processor of engine control system 22 can process data sufficiently fast to calculate, in real time, the timing and duration of injector actuation to set both the timing and the amount of fueling.

Engine 20 further comprises an intake system having an intake manifold 30 mounted on block 28. An intercooler 32 and a compressor 34 of a turbocharger 36 are upstream of manifold 30. Compressor 34 draws air through intercooler 32 to create charge air that enters each engine cylinder from manifold 30 via a corresponding intake valve that opens and closes at proper times during engine cycles.

Engine 20 also comprises an exhaust system 37 through which exhaust gases created by combustion within the engine cylinders can pass from the engine to atmosphere. The exhaust system comprises an exhaust manifold 38 mounted on block 28. Exhaust gases pass from each cylinder into manifold 38 via a respective exhaust valve that opens and closes at proper times during engine cycles.

Turbocharging of engine 20 is accomplished by turbocharger 36 that further comprises a turbine 40 associated with the exhaust system and coupled via a shaft to compressor 34. Hot exhaust gases acting on turbine 40 cause the turbine to operate compressor 34 to develop the charge air that provides boost for engine 20.

The exhaust system further comprises a DOC housing 44 and a DPF 48 downstream of turbine 40 for treating exhaust gas before it passes into the atmosphere through an exhaust pipe 49. Although the DOC housing 44 and the DPF 48 are shown as separate components, it is also possible that the DOC housing 44 and the DPF 48 share a common housing.

DPF 48 physically traps a high percentage of DPM in exhaust gas passing through it, preventing the trapped DPM from passing into the atmosphere. Oxidation catalyst within the DOC housing 44 oxidizes hydrocarbons (HC) in the incoming exhaust gas to CO₂ and H₂O and converts NO to NO₂. The NO₂ is then used to reduce the carbon particulates trapped in DPF 48.

With regard to passive and active regeneration as mentioned above, U.S. Patent 6,829,890; and U.S. Published Patent Applications 2008/0184696 and 2008/0093153 describe systems and methods for undertaking regeneration. These patents and publications are herein incorporated by reference.

According to the disclosed exemplary embodiment of the invention, an electric heating element, such as an electric resistance coil 52 is arranged within the exhaust system between the turbine 40 and the DOC housing 44. The coil 52 is powered through a relay 56 that is energized by vehicle power, such as from an engine alternator 60 that is driven conventionally by the engine 20 through a belt driven pulley, or the like. The alternator 60 also recharges the vehicle batteries 64 as known. A temperature sensor 70, such as a thermocouple, is arranged upstream of the DOC housing 44 or on the DOC housing 44. The temperature sensor 70 communicates an exhaust gas temperature corresponding to the exhaust gas temperature within the DOC housing 44 to the engine 22.

During engine idle or other low exhaust gas flow conditions, if the temperature falls below the required temperature for regeneration, and the control 22 demands regeneration, the engine control 22 energizes the relay 56 to pass electric current to the coil 52 to heat the exhaust gas flowing into the DOC housing 44. Once the temperature sensed by the sensor 70 exceeds the exhaust gas temperature needed for regeneration, the control 22 de-energizes the relay and current is cut off from the coil 52.

From the foregoing, it will be observed that numerous variations and modifications may be effected without departing from the spirit and scope of the invention. It is to be understood that no limitation with respect to the specific apparatus illustrated herein is intended or should be inferred.

## Claims

1. An exhaust system for a diesel engine, the diesel engine generating exhaust from the combustion of fuel, comprising:
an exhaust path receiving exhaust from the diesel engine;
a diesel oxidation catalyst (DOC) housing within the exhaust path;
a diesel particulate filter (DPF) within the exhaust path downstream of the DOC housing; and
an electric heating element within the exhaust path upstream of the DOC housing, the electric heating element configured to raise the temperature of exhaust gas entering the DOC housing.

2. The exhaust system according to claim 1, comprising an engine control and a relay having a signal side that is signal-connected to the engine control and a power side connected between engine electric power and the electric heating element, the engine control triggering the relay to provide electric power to the electric heating element when exhaust temperature must be raised for sufficient DOC activation for effective DPF regeneration.

3. The exhaust system according to claim 2, wherein the exhaust path comprises a turbine upstream of the DOC housing and the electric heating element is arranged between the turbine and the DOC housing.

4. The exhaust system according to claim 3, wherein the electric heating element is arranged at the inlet of the DOC housing.

5. The exhaust system according to claim 1, wherein the electric heating element is sized to heat exhaust gas to about 250°C.

6. In a vehicle powered by a diesel engine, the diesel engine providing mechanical power to drive an electrical power generator, the diesel engine having a turbocharger that includes a compressor and an exhaust-driven turbine, the turbine having an exhaust outlet that is flow connected to a diesel oxidation catalyst (DOC) housing that is flow-connected to a diesel particulate filter (DPF), and an engine electronic control unit that receives engine sensor signals and sends engine control signals to change engine controllable parameters to control engine emissions, the improvement comprising:
an electric heating element arranged in a flow path between the turbine and the DOC housing, the electric heating element being signal-connected to the engine electronic control unit and powered by the electrical power generator when the engine electronic control unit requests a higher exhaust gas temperature into the DOC housing.

7. The improvement according to claim 6, comprising a relay having a signal side connected to the engine electronic control module and a power side connected between the electrical power generator and the electrical heating element.

8. The improvement according to claim 7, wherein the electrical heating element is located within an exhaust pipe between a turbine outlet and a DOC housing inlet.

9. The improvement according to claim 8, comprising a temperature sensor arranged between the DOC housing and the electric heating element.

10. A method of initiating diesel particulate filter (DPF) regeneration for a diesel engine having an exhaust path that includes a diesel oxidation catalyst (DOC) upstream of a DPF comprising the steps of:
determining if regeneration is required; and
heating the exhaust gas in communication with the DOC using an electric heating element in heat transfer communication with the exhaust gas.

11. The method according to claim 10, wherein the step of heating the exhaust gas is further defined by the steps of:
sensing the temperature of the exhaust gas in communication with the DOC; and
only if the temperature of the exhaust gas is below a required DOC activation temperature, undertaking the heating of the exhaust gas.

12. The method according to claim 11 wherein the step of heating the exhaust gas is further defined by the step of:
generating the electric power required for the electric heating element by converting engine mechanical power to electrical power.
